# EUROPÄISCHE PATENTANMELDUNG

(11) **EP 3 333 100 A1**
(43) Veröffentlichungstag der Anmeldung: **13.06.2018**
(21) Anmeldenummer: 17201246.0
(22) Anmeldetag: 13.11.2017
(51) Int. Cl.: B65G 17/00, B23Q 7/03, B23Q 7/14

(54) **FÖRDERVORRICHTUNG UND FÖRDERVERFAHREN FÜR EINE MONTAGELINIE MIT MINDESTENS EINEM MONTAGEPLATZ**

(30) Priorität: 08.12.2016 DE 102016224441
(71) Anmelder: Robert Bosch GmbH, 70442 Stuttgart (DE)
(72) Erfinder: Jakobi, Johannes, 45130 Essen (DE)
(74) Vertreter: Thürer, Andreas

(57) **Zusammenfassung**

Es ist eine Fördervorrichtung (30) und ein Förderverfahren für eine Montagelinie (1) mindestens einem Montageplatz (10, 20) bereitgestellt. Die Fördervorrichtung (30) umfasst mindestens ein Führungs- und/oder Fördermittel (31, 32), an welchem der mindestens eine Montageplatz (10, 20) angeordnet ist, zum Fördern eines Werkstückträgers (40) in einer ersten Förderrichtung (X), und mindestens ein Hubprofil (33) für jeden Montageplatz (10, 20), wobei das mindestens eine Hubprofil (33) zum Fördern des Werkstückträgers (40) in einer zweiten Förderrichtung (Y) ausgestaltet ist, die quer zur ersten Förderrichtung (X) angeordnet ist, und wobei das mindestens eine Führungs- und/oder Fördermittel (31, 32) und das Hubprofil (33) derart zueinander angeordnet sind, dass ein Fördern des Werkstückträgers (40) in der ersten Förderrichtung (X) unabhängig von einem Fördern des Werkstückträgers (40) in der zweiten Förderrichtung (Y) ausführbar ist.

## Beschreibung

Die vorliegende Erfindung bezieht sich auf eine Fördervorrichtung und ein Förderverfahren für eine Montagelinie mit mindestens einem Montageplatz.

Bei der Fertigung von Gegenständen, wie beispielsweise elektrischen Antrieben, kann es gefordert sein, Gegenstände unterschiedlicher Baugrößen an verschiedenen und nacheinander angeordneten Arbeitsplätzen oder Montageplätzen zu montieren. Die nacheinander angeordneten Montageplätze bilden eine Montagelinie.

Beispielsweise wird für eine Anlaufphase einer Serienfertigung elektrischer Antriebe gefordert, unterschiedliche Baugrößen der Antriebe auf der Montagelinie zu montieren. Hierbei ist das Material oder Werkstücke für den zu fertigenden Gegenstand von etwa 30 unterschiedlichen Antrieben in x Varianten dem jeweiligen Montagemitarbeiter an der Montagelinie im richtigen Moment bereitzustellen.

In der Montagelinie kann eine Fördervorrichtung zur Förderung von Werkstücken oder dem bereits teilgefertigten Gegenstand zwischen mehreren aufeinanderfolgenden oder nacheinander angeordneten Montageplätzen Verwendung finden. Hierbei stehen für die Förderung oder den Transport zwischen den Montageplätzen sowie für die Montage selbst Werkstückträger bereit, welche entlang der Montagelinie gefördert werden. Die an den Montageplätzen anstehenden Montageschritte, werden von Maschinen und/oder von Montagepersonal ausgeführt.

Für eine möglichst einfache und schnelle und damit kostengünstige Montage ist es notwendig, dem Montagepersonal die für jeden Arbeitsschritt vorgesehenen Werkstücke zum richtigen Zeitpunkt bereitzustellen. Zudem müssen die Werkstücke in eine für das Montagepersonal angemessene Arbeitshöhe oder Montagehöhe gebracht werden.

Eine Anpassung der Montagehöhe erfolgt in aktuellen Fördervorrichtungen zum einen durch Anheben bzw. Absenken der Werkstückträger an vorgegebenen Orten der Montagelinie, beispielsweise durch einen Aufzug oder einen Roboter. Problematisch ist hierbei, dass eine solche Vorrichtung zum Anheben bzw. zum Absenken der Werkstückträger sehr teuer, sehr aufwendig in der Herstellung sowie sehr wartungsintensiv ist. Des Weiteren entstehen dadurch viele Leerlaufzeiten, in denen an dem Montageplatz keine Montageschritte durch Montagepersonal vorgenommen werden können.

Andere Fördervorrichtungen ermöglichen ein Anheben bzw. ein Absenken der gesamten Montagelinie, um die Arbeitshöhe oder Montagehöhe anzupassen. Bei solchen Fördervorrichtungen ist jedoch nachteilig, dass die Anpassung der Montagehöhe nicht individuell je Montageplatz einstellbar ist.

Daher ist es Aufgabe der vorliegenden Erfindung, eine Fördervorrichtung und ein Förderverfahren für eine Montagelinie mit mindestens einem Montageplatz bereitzustellen, mit welchen die zuvor genannten Probleme gelöst werden können. Insbesondere sollen eine Fördervorrichtung für eine Montagelinie mit mindestens einem Montageplatz und zur Durchführung eines Förderverfahrens bereitgestellt werden, wobei die Fördervorrichtung sowohl im Betrieb sehr einfach, flexibel und schnell an die jeweils benötigte Montagehöhe an dem Montageplatz anpassbar ist als auch kostengünstig und einfach in der Herstellung sowie wenig wartungsintensiv ist.

Diese Aufgabe wird durch eine Fördervorrichtung für eine Montagelinie mit mindestens einem Montageplatz nach Anspruch 1 gelöst. Die Fördervorrichtung hat mindestens ein Führungs- und/oder Fördermittel, an welchem der mindestens eine Montageplatz angeordnet ist, zum Fördern eines Werkstückträgers in einer ersten Förderrichtung, und mindestens ein Hubprofil für jeden Montageplatz, wobei das mindestens eine Hubprofil zum Fördern des Werkstückträgers in einer zweiten Förderrichtung ausgestaltet ist, die quer zur ersten Förderrichtung angeordnet ist, und wobei das mindestens eine Führungs- und/oder Fördermittel und das Hubprofil derart zueinander angeordnet sind, dass ein Fördern des Werkstückträgers in der ersten Förderrichtung unabhängig von einem Fördern des Werkstückträgers in der zweiten Förderrichtung ausführbar ist.

Die beschriebene Fördervorrichtung ist derart ausgestaltet, dass eine Anpassung der Arbeitshöhe oder Montagehöhe an den verschiedenen Werkstückträgern der Montagelinie unabhängig voneinander möglich ist. Somit kann die Arbeitshöhe oder Montagehöhe an den verschiedenen Werkstückträgern individuell an jedem Montageplatz je nach Bedarf angepasst werden, auch wenn die Montageplätze miteinander verkettet sind. Die Anpassung der Montagehöhe an den verschiedenen Werkstückträgern ist hierbei einfach, flexibel und schnell an jedem Montageplatz individuell und dadurch sehr ergonomisch und dennoch für eine variantenspezifische Materialbereitstellung sehr flexibel möglich.

Zudem ermöglicht die oben beschriebene Fördervorrichtung für eine Montagelinie mit mindestens einem Montageplatz eine Anpassung oder Einstellung des Werkstückträgers auf die jeweils gewünschte Montagehöhe während einer Vorschubbewegung des Werkstückträgers. Somit werden unnötige Leerlaufzeiten vermieden. Außerdem können dadurch die Arbeitsabläufe in der Montagelinie optimiert und eine variantenspezifische Materialbereitstellung ermöglicht werden.

Des Weiteren bietet die beschriebene Fördervorrichtung den Vorteil, dass die Fördervorrichtung sehr einfach und kostengünstig herstellbar ist.

Vorteilhafte weitere Ausgestaltungen der Fördervorrichtung sind in den abhängigen Ansprüchen angegeben.

Die Aufgabe wird zudem durch ein Verfahren für eine Montagelinie mit mindestens einem Montageplatz nach Anspruch 10 gelöst.

Das Verfahren erzielt die gleichen Vorteile, wie sie zuvor in Bezug auf die Vorrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein Blockschaltbild einer Montagelinie mit einer Fördervorrichtung gemäß einem ersten Ausführungsbeispiel;
Fig. 2 eine dreidimensionale Ansicht eines Werkstückträgers an einem Montageplatz der Montagelinie;
Fig. 3 und Fig. 4 jeweils eine Detailansicht einer Hubplattform eines Werkstückträgers für die Montagelinie; und
Fig. 5 und Fig. 6 jeweils eine Detailansicht einer Führung für die Hubplattform.

In den Figuren sind gleiche oder funktionsgleiche Elemente, sofern nichts anderes angegeben ist, mit denselben Bezugszeichen versehen.

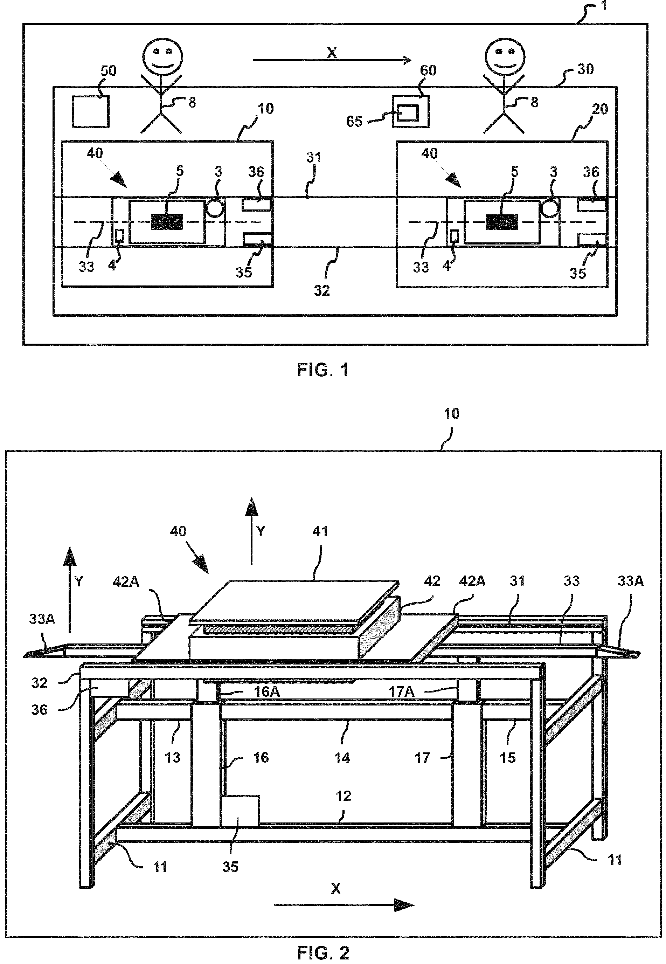

Fig. 1 zeigt schematisch eine Montagelinie 1, die beispielsweise einen ersten Montageplatz 10 und einen zweiten Montageplatz 20 aufweist, die an einer Fördervorrichtung 30 angeordnet sind. Die Fördervorrichtung 30 wird für die Förderung oder den Transport von Werkstückträgern 40 verwendet, die zur Aufnahme von Werkstücken 3, 4 und mindestens einem Gegenstand 5 ausgestaltet sind, der aus den Werkstücken 3, 4 gefertigt wird. Der Gegenstand 5 kann beispielsweise ein elektrischer Antrieb beliebiger Baugröße oder Bauart sein. Es sind jedoch auch beliebige andere zu fertigende Gegenstände möglich.

Der erste und zweite Montageplatz 10, 20 sind in Fig. 1 als Beispiel nebeneinander oder in einer Reihe nacheinander in der Montagelinie 1 angeordnet. Jeder Montageplatz 10, 20 wird von mindestens einem Arbeiter oder Montagepersonal 8 und/oder einer Maschine 50 bedient.

Die Montagelinie 1 wird von einer Steuereinrichtung 60 gesteuert, die hierfür Daten 65 verarbeitet. Die Daten 65 werden von den Montageplätzen 10, 20 und/oder der Fördervorrichtung 30 drahtlos oder drahtgebunden an die Steuereinrichtung 60 gesendet werden. Die Daten 65 können jedoch alternativ oder zusätzlich Daten umfassen, die zuvor in einer nicht dargestellten Speichereinrichtung gespeichert sind, wie beispielsweise Sollwerte für die Fördervorrichtung 30, wie insbesondere eine maximale Fördergeschwindigkeit mit der Fördervorrichtung 30, Angaben zu Wartungsintervallen, Ausrichtung und/oder Montagehöhen der Werkstückträger 40 an den Montageplätzen 10, 20, usw..

Die Fördervorrichtung 30 weist ein erstes und zweites Führungs- und/oder Fördermittel 31, 32, ein Hubprofil 33, eine Antriebseinrichtung 35 und eine Erfassungseinrichtung 36 auf, welche zumindest einen Teil der Daten 65 für eine Steuerung der Steuereinrichtung 60 erfasst.

Das erste und zweite Führungs- und/oder Fördermittel 31, 32 führen und/oder fördern den Werkstückträger 40 mit oder ohne darauf vorhandenen Werkstück(en) 3, 4 und/oder Gegenstand 5 zwischen den Montageplätzen 10, 20 oder von Montageplatz 10 zu Montageplatz 20 oder umgekehrt. Somit dienen das erste und zweite Führungs- und/oder Fördermittel 31, 32 zum Führen und/oder Fördern des Werkstückträgers 40 mit oder ohne darauf vorhandenen Werkstück(en) 3, 4 und/oder Gegenstand 5 in X-Richtung, die nachfolgend auch als erste Förderrichtung X bezeichnet wird. In Fig. 1 entspricht die X-Richtung oder erste Förderrichtung X der horizontalen Richtung. Die Führungs- und/oder Fördermittel 31, 32 agieren nur als Führungsmittel, wenn die Förderung des Werkstückträgers 40 manuell durch den mindestens einen Arbeiter oder Montagepersonal 8 und/oder die Maschine 50 erfolgt.

Dagegen dient das Hubprofil 33 unter Antrieb der Antriebseinrichtung 35 zum Fördern des Werkstückträgers 40 mit oder ohne darauf vorhandenem/n Werkstück(en) 3, 4 und/oder Gegenstand 5 in einer Richtung, die quer zur ersten Förderrichtung X angeordnet ist. Dies ist in Fig. 2 als Beispiel für den ersten Montageplatz 10 genauer veranschaulicht. Der zweite Montageplatz 20 ist bei dem vorliegenden Ausführungsbeispiel identisch zu dem ersten Montageplatz aufgebaut.

Gemäß Fig. 2 ist an dem Montageplatz 10 ein Gestell vorhanden, das aus zwei vertikalen Stützen 11, horizontalen Verstrebungen 12, 13, 14, 15 und zwei teleskopförmigen Hubsäulen 16, 17 mit jeweils einer Innensäule 16A, 17A aufgebaut ist. An den vertikalen Stützen 11 sind die Führungs- und/oder Fördermittel 31, 32 beabstandet voneinander angeordnet. Die Führungs- und/oder Fördermittel 31, 32 sind bei dem in Fig. 2 gezeigten Montageplatz 10 jeweils parallel zu den Verstrebungen 12, 13, 14, 15 angeordnet. Zudem sind die Führungs- und/oder Fördermittel 31, 32 bei dem in Fig. 2 gezeigten Montageplatz 10 jeweils quer, insbesondere senkrecht, zu den beiden vertikalen Stützen 11 angeordnet. Darüber hinaus sind die Führungs- und/oder Fördermittel 31, 32 bei dem in Fig. 2 gezeigten Montageplatz 10 jeweils quer, insbesondere senkrecht, zu den Hubsäulen 16, 17 und deren Innensäulen 16A, 17A angeordnet. Die Hubsäulen 16, 17 sind in der ersten Förderrichtung X beabstandet voneinander angeordnet.

Das Hubprofil 33 ist zwischen den Führungs- und/oder Fördermitteln 31, 32 angeordnet. Bei dem in Fig. 2 gezeigten Beispiel ist das Hubprofil 33 parallel zu den Führungs- und/oder Fördermitteln 31, 32 angeordnet. Das Hubprofil 33 hat abgeschrägte Hubprofilenden 33A, die Rampen des Hubprofils 33 bilden. Das Hubprofil 33 ist in Fig. 2 als Schiene ausgestaltet. Das Hubprofil 33 hat vorzugsweise eine etwas längere Länge in der ersten Förderrichtung X wie der jeweils zugehörige Montageplatz 10, 20, wie in Fig. 2 für den ersten Montageplatz dargestellt.

Das Hubprofil 33 ist mit den Innensäulen 16A, 17A der Hubsäulen 16, 17 verbunden. Die Innensäulen 16A, 17A können durch Antrieb der Antriebseinrichtung 35 aus den Hubsäulen 16, 17 ausgefahren oder in die Hubsäulen eingefahren werden, wodurch das Hubprofil 33 in Y-Richtung verstellbar ist, die nachfolgend auch als zweite Förderrichtung Y bezeichnet ist. In Fig. 2 entspricht die zweite Förderrichtung Y der Vertikalen zum Werkstückträger 40. Vorzugsweise ist das Hubprofil 33 in der zweiten Förderrichtung Y stufenlos verstellbar.

Der Werkstückträger 40 ist mit den beiden Führungs- und/oder Fördermitteln 31, 32 gekoppelt und wird mit diesen entlang der Montagelinie 1 in die erste Förderrichtung X gefördert, wie zuvor beschrieben. Außerdem ist der Werkstückträger 40 mit dem Hubprofil 33 gekoppelt.

Jedes der Führungs- und/oder Fördermittel 31, 32 kann beispielsweise als Staurollenkette ausgeführt sein, wie beispielsweise von der Bosch Rexroth AG vertrieben. Mit einer Staurollenkette können schnelle Wechselzeiten zwischen den einzelnen Montageplätzen 10, 20 und eine Verkürzung der Gesamtzykluszeiten für eine Montage in der Montagelinie 1 ermöglicht werden. Zudem sind durch die Staurollenkette(n) hohe Fördergeschwindigkeiten und Beschleunigungen des Werkstückträgers 40 möglich. Des Weiteren hat eine Staurollenkette eine große Laufruhe sowie einen geringen Verschleiß.

Wie in Fig. 2 gezeigt, weist der Werkstückträger 40 als erstes Teil eine Hubplattform 41 und als zweites Teil eine Führung 42 mit zwei Materialbereitstellungsflächen 42A auf. Somit ist der Werkstückträger 40 zweiteilig aufgebaut. Die Hubplattform 41 und die Führung 42 sind relativ zueinander bewegbar. Genauer gesagt, die Hubplattform 41 ist relativ zur Führung 42 und geführt von der Führung 42 in der zweiten Förderrichtung Y bewegbar. Bei dem Werkstückträger von Fig. 2 ist die Hubplattform 41 in der Führung 42 angeordnet und geführt.

Die Hubplattform 41 ist in der zweiten Förderrichtung Y über den beiden Materialbereitstellungsflächen 42A angeordnet. Die Materialbereitstellungsflächen 42A sind auf der linken und rechten Seite des Werkstückträgers 40 vorgesehen. Anders ausgedrückt, die Hubplattform 41 ist zwischen den beiden Materialbereitstellungsflächen 42A angeordnet. Der Höhenunterschied der beiden Materialbereitstellungsflächen 42A in der zweiten Förderrichtung Y zur Arbeitsfläche oder Montagefläche auf der Hubplattform 41 verhindert, dass auf den Materialbereitstellungsflächen 42A bereitgestellte Werkstücke 3, 4 den Arbeitsraum oder Montageraum auf der Hubplattform 41 einschränken. Daher befinden sich die beiden Materialbereitstellungsflächen 42A abgesetzt auf einer niedrigeren Ebene als die Arbeitsfläche oder Montagefläche auf der Hubplattform 41. Eine derartige Ausgestaltung des Werkstückträgers 40 ermöglicht auch, dass variantenübergreifendes Material oder Werkstücke 3, 4 in einem nicht dargestellten Regal der Montagelinie 1 untergebracht wird, variantenspezifische Bauteile oder Werkstücke 3, 4 hingegen auf der Rückseite der Montagelinie 1 durch einen Feinlogistiker auf einem Werkstückträger 40 vorkommissioniert werden.

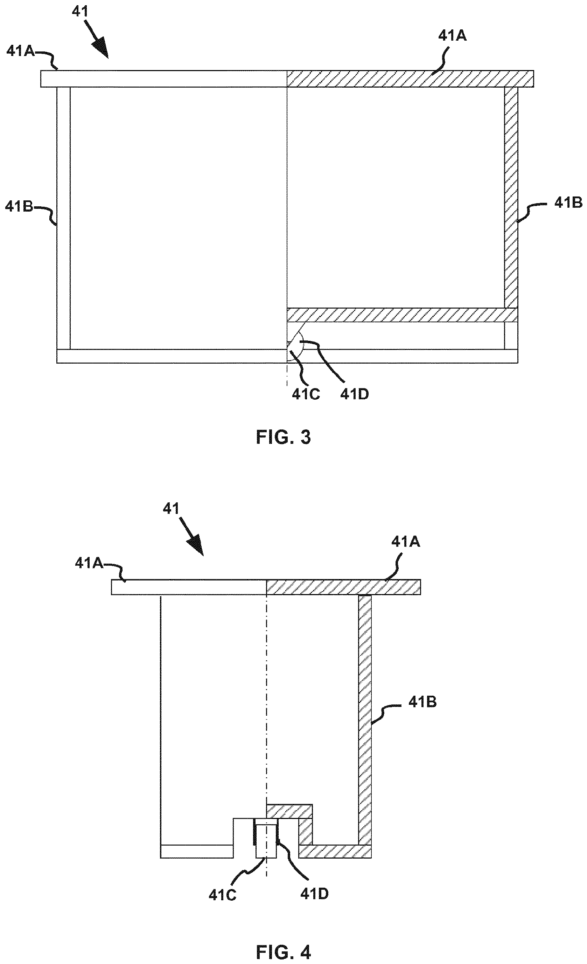

Fig. 3 und Fig. 4 zeigen die Hubplattform 41 des Werkstückträgers 40 von zwei verschiedenen Seiten genauer. Hierbei zeigt jeweils die linke Seite von Fig. 3 und Fig. 4 die linke Hälfte der Hubplattform 41 in einer Außenansicht. Auf der rechten Seite von Fig. 3 und Fig. 4 ist jeweils die rechte Hälfte der Hubplattform 41 im Schnitt gezeigt.

Gemäß Fig. 3 und Fig. 4 liegt eine Montagefläche 41A der Hubplattform 41 auf einem Gerüst 41B auf. Die Montagefläche 41A ist fest mit dem Gerüst 41B verbunden. Die Montagefläche 41A bildet die Oberseite des Gerüsts 41B und ist auch in Fig. 2 sichtbar. Wie aus Fig. 3 und Fig. 4 ersichtlich, ist am Boden oder der Unterseite des Gerüsts 41B mindestens eine Rolle 41C angeordnet, die mit einem Lager 41D am Gerüst 41B drehbar befestigt ist. Vorteilhafterweise ist die Unterseite des Gerüsts 41B parallel zur Förderrichtung X angeordnet. Die Rolle 41C ist mit dem Lager 41D vorzugsweise derart an der Unterseite des Gerüsts 41B befestigt, dass die Rolle 41C an dem Hubprofil 33 rollen kann, wenn der Werkstückträger 40 an den Montageplätzen 10, 20 angeordnet ist, wie in Fig. 1 und Fig. 2 gezeigt. Hierfür ist die Rolle beispielsweise in der Mitte der Hubplattform 41 angeordnet, wie in Fig. 3 und Fig. 4 gezeigt.

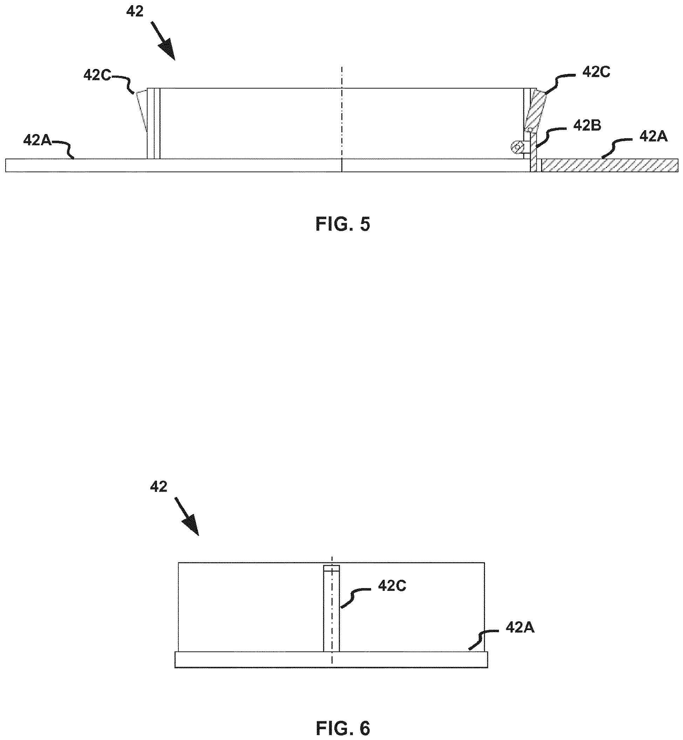

Fig. 5 und Fig. 6 zeigen die Führung 42 des Werkstückträgers 40 von zwei verschiedenen Seiten genauer. Hierbei zeigt die linke Seite von Fig. 5 und Fig. 6 jeweils die linke Hälfte der Führung 42 in einer Außenansicht. Auf der rechten Seite von Fig. 5 und Fig. 6 ist die rechte Hälfte der Führung 42 jeweils im Schnitt gezeigt.

Gemäß Fig. 5 und Fig. 6 hat die Führung 42 zusätzlich zu den Materialbereitstellungsflächen 42A einen Rahmen 42B und Arretierungen 42C. Die Materialbereitstellungsflächen 42A sind fest mit dem Rahmen 42B verbunden.

Der Rahmen 42B ist als Hülse, insbesondere Viereckhülse, ausgeführt, welche zur Aufnahme des Gerüsts 41B der Hubplattform 41A ausgestaltet ist. Der Rahmen 42B und das Gerüst 41B der Hubplattform 41A haben vorzugsweise die gleiche Form, wobei die Hubplattform 41A etwas kleinere Außenabmessungen hat als die Führung 42 Innenabmessungen hat. Dadurch ist die Hubplattform 41 derart in der Führung 42 geführt, dass die Hubplattform 41 relativ zur Führung 42 nur in die zweite Förderrichtung Y gefördert werden kann. Ein Fördern der Hubplattform 41 relativ zur Führung 42 in die erste Förderrichtung X wird durch die Führung 42 verhindert. Die Arretierungen 42C sind an dem Rahmen 42B angeordnet und können eine Relativbewegung zwischen Hubplattform 41 und Führung 42 in die zweite Förderrichtung Y verhindern. Hierfür sind die Arretierungen 42C beispielsweise durch Montagepersonal an dem Werkstückträger 40 zu betätigen. Die Hubplattform 41 wird in dem jeweils erforderlichen ausgefahrenen oder eingefahrenen Zustand mit Hilfe der Arretierungen 42C an der Führung 42 arretiert. Die Arretierung der Hubplattform 41 mit den Arretierungen 42C an der Führung 42 ist beispielsweise bei einem Quertransport des Werkstückträgers 40 in einer weiteren Richtung erforderlich, die quer zu der ersten und zweiten Förderrichtung X, Y angeordnet ist, da die Hubplattform 41 länger als die Führung 42 ist und dadurch unten aus der Führung 42 herausragt. Der Werkstückträger 40 kann zumindest zeitweise in der weiteren Richtung führ- oder förderbar sein. Bei dem Quertransport des Werkstückträgers 40 kann der Werkstückträger 40 beispielsweise an eine weitere, nicht dargestellte Fördervorrichtung übergeben werden. Dadurch sind auch Abzweigungen oder Kreuzungen in der Montagelinie 1 möglich.

Bei einem mit der Fördervorrichtung 30 ausgeführten Förderverfahren kann der Werkstückträger 40 von dem ersten Montageplatz 10, an welchem mindestens ein erster Montageschritt durch erstes Montagepersonal 8 ausgeführt werden, mit den zwei Führungs- und/oder Fördermitteln 31, 32 entlang der Montagelinie 1 in der erste Förderrichtung X zu dem zweiten Montageplatz 10 gefördert werden. An dem zweiten Montageplatz 10 kann mindestens ein weiterer Montageschritt durch zweites Montagepersonal 8 ausgeführt werden.

Hierbei erfasst die Erfassungseinrichtung 36 die Größe des Montagepersonals 8 und/oder der Werkstücke 3, 4 und/oder des Gegenstands 5 an dem jeweiligen Montageplatz 10, 20 und gibt die erfassten Daten 65 an die Steuereinrichtung 60 weiter. Vorteilhafterweise weist die Erfassungseinrichtung 36 mindestens einen Sensor auf, der Daten 65 beispielsweise mit Hilfe von mindestens einem RFID-Tag oder RFID-Transponder (RFID = Radio-Frequency Identification = Identifizierung mit Hilfe elektromagnetischer Wellen) an insbesondere mindestens einem der Werkstücke 3, 4 und/oder des Gegenstands 5 erfasst und/oder zur Erfassung einer Seriennummerkennung an insbesondere mindestens einem der Werkstücke 3, 4 und/oder des Gegenstands 5 als Daten 65 ausgestaltet ist. Der RFID-Tag und/oder die Seriennummerkennung kann alternativ oder zusätzlich an dem Montageplatz 10, 20 angeordnet sein und/oder von dem Montagepersonal 8 mit Hilfe eines entsprechenden Lesegeräts eingelesen werden.

Die Steuereinrichtung 60 wertet die Daten 65, beispielsweise durch einen Vergleich mit Sollwerten, aus und steuert die Antriebseinrichtung 35 der Hubsäulen 16, 17 an, um das Hubprofil 33 in der zweiten Förderrichtung Y auf die Höhe zu verstellen, in welcher die Montagefläche 41A der Hubplattform 41 auf die gewünschte Montagehöhe gestellt ist. Hierfür ist das Hubprofil 33 fest mit den Hubsäulen 16, 17 gekoppelt. Die Hubsäulen 16, 17 sind gleich ausgestaltet und arbeiten synchron.

Wird nun der Werkstückträger 40 aufgrund der Kopplung der Führung 42 mit den zwei Führungs- und/oder Fördermitteln 31, 32 in die erste Förderrichtung X gefördert, rollt die Rolle 41C der Hubplattform 41 an einem Hubprofilende 33A auf das Hubprofil 33 hinauf. Dadurch wird die Hubplattform 41 relativ zum Rahmen 42 in der zweiten Förderrichtung Y verstellt. Zusätzlich kann bei Bedarf das Hubprofil 33 und damit die Höhe der Montagefläche 41A der Hubplattform 41 auf die gewünschte Höhe eingestellt werden.

Somit erfolgt während einer Förderung des Werkstückträgers 40 entlang der Montagelinie 1 in die erste Förderrichtung X von dem ersten Montageplatz 10 zu dem zweiten Montageplatz 20 eine Anpassung der Höhe der Montagefläche 41A durch Anheben oder Absenken der Hubplattform 41 des Werkstückträgers 40 mit Hilfe des Hubprofils 33 in die zweite Förderrichtung Y. Während der Förderung des Werkstückträgers 40 wird folglich die Hubplattform 41 in der ersten und zweiten Förderrichtung X, Y gefördert. Im Gegensatz dazu wird die Führung 42 nur in der ersten Förderrichtung X gefördert, da die maximale Höhe des Hubprofils 33 in der zweiten Förderrichtung Y niedriger eingestellt ist als die Unterseite der Führung 42 an den Montageplätzen 10, 20.

Somit ist ein Fördern des Werkstückträgers 40 in die erste und zweite Förderrichtung X, Y ohne Elektrifizierung des Werkstückträgers 40 möglich. Dadurch ist die Höhenverstellung des Werkstückträgers 40 kostengünstig realisierbar und wartungsarm.

Außerdem kann anhand der ermittelten Daten 65 in Bezug auf mindestens ein Werkstück 3, 4 und/oder in Bezug auf den mindestens einen Gegenstand 5 und/oder den mindestens einen Werkstückträger 40 und/oder in Bezug auf das Montagepersonal 8 ein Fördern des Werkstückträgers 40 im Sinne der Industrie 4.0 dynamisch ohne Eingriff des Montagepersonal 8 erfolgen.

Der Werkstückträger 40 kann zu beliebig vielen weiteren Montageplätzen 10, 20 entlang der Montagelinie 1 gefördert werden, wie zuvor beschrieben.

Gemäß einem zweiten Ausführungsbeispiel kann das Hubprofil 33 an mindestens einem der Montageplätze 10, 20 ohne Ansteuerung durch eine übergeordnete Steuereinrichtung 60 verstellt werden. In diesem Fall sind an dem mindestens einen der Montageplätze 10, 20 Informationen vorhanden, die es dem Montagepersonal 8 ermöglichen, das Hubprofil 33 auf die für das jeweilige Montagepersonal 8 erforderliche Höhe einzustellen. Hierfür kann an dem mindestens einen der Montageplätze 10, 20 beispielsweise eine Schalteinrichtung vorhanden sein, mit welcher die Antriebseinrichtung 35 auf die gewünschte Weise zum Anheben oder Senken des Hubprofil 33 durch Ausfahren oder Einfahren der Innensäulen 16A, 17A in die zugehörige Hubsäule 16, 17 angesteuert wird. In diesem Fall kann die Erfassungseinrichtung 36 und deren Anbindung an die Steuereinrichtung 60 weggelassen werden.

Hierfür kann ein höheres Hubprofil 33 und Abschrägung an den Hubprofilenden 33A in der zweiten Förderrichtung Y erforderlich sein als an Montageplätzen 10, 20 gemäß dem ersten Ausführungsbeispiel, an welchen eine Förderung in der zweiten Förderrichtung Y auch noch nach Aufrollen des Werkstückträgers 40 auf das Hubprofil 33 bis zu der Montageposition des Montagepersonals 8 in der ersten Förderrichtung X an dem Montageplatz 10, 20 möglich ist.

Gemäß einem dritten Ausführungsbeispiel kann das Hubprofil 33 an mindestens einem der Montageplätze 10, 20 vollkommen mechanisch verstellt werden. In diesem Fall sind wie bei dem zweiten Ausführungsbeispiel keine Erfassungseinrichtung 36 und deren Anbindung an die Steuereinrichtung 60 vorhanden. Zusätzlich wird die Höhe des Hubprofils 33 beispielsweise mittels einer als Handkurbel ausgeführten Antriebseinrichtung verstellt. In diesem Fall kann auch die Elektrifizierung des mindestens einen der Montageplätze 10, 20 entfallen.

Alle zuvor beschriebenen Ausgestaltungen der Montagelinie 1 und des Förderverfahrens können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Ausgestaltung des mindestens einen Hubprofils 33 in seiner Länge in der ersten Förderrichtung X und in seiner Höhe und Abschrägung an den Hubprofilenden 33A in der zweiten Förderrichtung Y kann je nach spezieller Ausführung variieren.

Möglich ist außerdem, dass der Werkstückträger 40 bei einem beliebigen Montageschritt an mindestens einem der Montageplätze 10, 20 mit einem langsameren Vorschub gefördert wird, so dass der Werkstückträger 40 nicht im Ruhezustand verharrt.

Die Befestigung der Hubsäulen 16, 17 an den Montageplätzen 10, 20 ist beliebig wählbar, solange die zuvor beschriebene Funktion erfüllt wird. Beispielsweise ist es auch möglich, dass die Hubsäulen 16, 17 am Boden unter dem Montageplatz 10, 20 befestigt sind.

Alternativ zu der Ausführung des mindestens einen Führungs- und/oder Fördermittels 31, 32 als Staurollenkette kann das mindestens eine Führungs- und/oder Fördermittel 31, 32 als Antriebskette oder Gliederkette ausgeführt sein.

Es ist außerdem möglich, dass anstelle nur eines Hubprofils 33 mehr als ein Hubprofil 33 vorhanden ist, zwischen denen das mindestens eine Führungs- und/oder Fördermittel 31, 32 angeordnet ist. Insbesondere kann nur ein Führungs- und/oder Fördermittel 31 zwischen zwei Hubprofilen 33 vorgesehen sein. Alternativ können drei Führungs- und/oder Fördermittel 31, 32 benachbart nebeneinander angeordnet sein, wobei zwischen jeweils zwei Führungs- und/oder Fördermitteln 31, 32 jeweils ein Hubprofil 33 angeordnet ist. Dieses Prinzip lässt sich für beliebige Anordnungen fortsetzen, wobei auch mehr als ein Führungs- und/oder Fördermittel 31, 32 zwischen zwei Hubprofilen 33 vorhanden sein kann oder mehr als ein Hubprofil 33 zwischen zwei Führungs- und/oder Fördermitteln 31, 32 vorhanden sein kann.

Möglicherweise ist mindestens ein Sensor zur Erfassung von Daten in Bezug auf die Umgebung des Arbeitsbereiches und/oder in Bezug auf die Umgebung der Montagelinie vorhanden. Auch diese Daten können in die Daten 65 mit einbezogen werden, welche zur Ansteuerung der Hubsäulen 16, 17 berücksichtigt werden.

Die Höhenverstellbarkeit des Werkstückträgers 40 in der Montagelinie 1 kann auch an bestehenden Montageplätzen 10, 20 einfach nachgerüstet werden. Hierbei können die bestehenden Montageplätzen 10, 20 auch nach und nach, je nach Bedarf und/oder vorhandenem Budget, vergleichsweise günstig nachgerüstet werden. Beispielsweise ist es vorstellbar bei einer konventionellen Montagelinie 1, die zwischen den Führungs- und/oder Fördermitteln 31, 32 einen Leerraum besitzt, die oberen Querverstrebung an den Stützen 11 abzusenken und mittels vier zusätzlichen Profilstücken als Verstrebungen 12, 13, 14, 15 die Hubsäulen 16, 17 zu montieren, auf denen ein weiteres konventionelles Profil, das Hubprofil 33, in der gewünschten Länge des Montageplatzes 10, 20 horizontal montiert wird.

## Patentansprüche

1. Fördervorrichtung (30) für eine Montagelinie (1) mit mindestens einem Montageplatz (10, 20), wobei die Fördervorrichtung (30) aufweist mindestens ein Führungs- und/oder Fördermittel (31, 32), an welchem der mindestens eine Montageplatz (10, 20) angeordnet ist, zum Fördern eines Werkstückträgers (40) in einer ersten Förderrichtung (X), und mindestens ein Hubprofil (33) für jeden Montageplatz (10, 20), wobei das mindestens eine Hubprofil (33) zum Fördern des Werkstückträgers (40) in einer zweiten Förderrichtung (Y) ausgestaltet ist, die quer zur ersten Förderrichtung (X) angeordnet ist, und wobei das mindestens eine Führungs- und/oder Fördermittel (31, 32) und das Hubprofil (33) derart zueinander angeordnet sind, dass ein Fördern des Werkstückträgers (40) in der ersten Förderrichtung (X) unabhängig von einem Fördern des Werkstückträgers (40) in der zweiten Förderrichtung (Y) ausführbar ist.

2. Fördervorrichtung (30) nach Anspruch 1, wobei das mindestens eine Führungs- und/oder Fördermittel (31, 32) an mindestens einer Staurollenkette angeordnet ist.

3. Fördervorrichtung (30) nach Anspruch 1 oder 2, wobei das mindestens eine Hubprofil (33) zwischen mindestens zwei Führungs- und/oder Fördermitteln (31, 32) angeordnet ist.

4. Fördervorrichtung (30) nach einem der vorangehenden Ansprüche, wobei das mindestens eine Hubprofil (33) zwei Hubprofilenden (33A) aufweist, von denen zumindest ein Ende abgeschrägt ist.

5. Fördervorrichtung (30) nach einem der vorangehenden Ansprüche, wobei das mindestens eine Hubprofil (33) mit mindestens einer Hubsäule (16, 17) gekoppelt ist, und/oder wobei mindestens zwei Hubsäulen (16, 17) mit dem mindestens einen Hubprofil (33) gekoppelt sind, um das Hubprofil (33) in der zweiten Förderrichtung (Y) synchron zu fördern.

6. Fördervorrichtung (30) nach einem der vorangehenden Ansprüche, wobei der Werkstückträger (40) zweiteilig aufgebaut ist, und/oder wobei ein erstes Teil des Werkstückträgers (40) eine Hubplattform (41) ist und ein zweiter Teil des Werkstückträgers (40) eine Führung (42) ist, die zum Führen der Hubplattform (41) angeordnet ist, und wobei die Hubplattform (41) und die Führung (42) relativ zueinander bewegbar sind.

7. Fördervorrichtung (30) nach einem der vorangehenden Ansprüche, wobei die Hubplattform (41) mit dem mindestens einen Hubprofil (33) gekoppelt ist und die Führung (42) mit dem mindestens einen Führungs- und/oder Fördermittel (31, 32) gekoppelt ist.

8. Fördervorrichtung (30) nach einem der vorangehenden Ansprüche, wobei die Hubplattform (41) mit einer Rolle (41C) an einem Hubprofil (33) anliegt und die Führung (42) an dem mindestens einen Führungs- und/oder Fördermittel (31, 32) anliegt, und/oder wobei die Hubplattform (41) und die Führung (42) durch mindestens eine Arretierung (42c) aneinander arretierbar sind.

9. Fördervorrichtung (30) nach einem der vorangehenden Ansprüche, zudem mit mindestens einer Erfassungseinrichtung (36) zur Erfassung von Daten (65) in Bezug auf mindestens ein Werkstück (3, 4), das von dem Werkstückträger (40) tragbar ist, und/oder in Bezug auf den mindestens einen Gegenstand (5) und/oder den mindestens einen Werkstückträger (40) und/oder zur Erfassung von Daten (65) in Bezug auf Montagepersonal (8) am Werkstückträger (40), einer Steuereinrichtung (60) zum Auswerten der von der mindestens einen Erfassungseinrichtung (36) erfassten Daten (65), und mindestens einer Antriebseinheit (35) zum Antrieb des Werkstückträgers (40) auf der Grundlage des Auswerteergebnisses der Steuereinrichtung (60) in der ersten und/oder zweiten Förderrichtung (X, Y).

10. Förderverfahren (30) für eine Montagelinie (1) mit mindestens einem Montageplatz (10, 20), wobei das Förderverfahren die Schritte aufweist Fördern, mit mindestens einem Führungs- und/oder Fördermittel (31, 32), an welchem der mindestens eine Montageplatz (10, 20) angeordnet ist, eines Werkstückträgers (40) in einer ersten Förderrichtung (X), und Fördern, mit mindestens einem Hubprofil (33), das für jeden Montageplatz (10, 20) vorgesehen ist, des Werkstückträgers (40) in einer zweiten Förderrichtung (Y), die quer zur ersten Förderrichtung (X) angeordnet ist, wobei das Führungs- und/oder Fördermittel (31, 32) und das Hubprofil (33) derart zueinander angeordnet sind, dass ein Fördern des Werkstückträgers (40) in einer ersten Förderrichtung (X) unabhängig von einem Fördern des Werkstückträgers (40) in der zweiten Förderrichtung (Y) ausgeführt wird.
